# EUROPÄISCHE PATENTSCHRIFT

(11) **EP 2 022 956 B1**
(45) Veröffentlichungstag und Bekanntmachung des Hinweises auf die Patenterteilung: **12.09.2012**
(21) Anmeldenummer: 08160509.9
(22) Anmeldetag: 16.07.2008
(51) Int. Cl.: F01N 13/08, F01N 3/20, B01F 5/04, F01N 3/28, B01F 3/02, B01F 5/06

(54) **Abgasanlage mit Strömungsleiteinrichtung**
Exhaust system with flow guiding device
Système d'échappement avec dispositif de guidage de l'écoulement

(30) Priorität: 25.07.2007 DE 102007035226
(43) Veröffentlichungstag der Anmeldung: 11.02.2009
(73) Patentinhaber: J. Eberspächer GmbH & Co. KG, 73730 Esslingen (DE)
(72) Erfinder: Wirth, Georg, 73230 Kirchheim/Teck (DE)
(74) Vertreter: BRP Renaud & Partner

(56) Entgegenhaltungen:
- EP-A1- 1 770 253
- WO-A1-00/12202
- US-A1- 2007 144 158

## Beschreibung

Die vorliegende Erfindung betrifft eine Abgasanlage mit einer Strömungsleiteinrichtung für eine Brennkraftmaschine, insbesondere in einem Kraftfahrzeug, mit den Merkmalen des Oberbegriffs des Anspruchs 1.

Aus der EP 1 770 253 A1 ist eine Abgasanlage für eine Brennkraftmaschine bekannt, die mit einer Strömungsleiteinrichtung ausgestattet ist. Bei der bekannten Abgasanlage ist die Strömungsleiteinrichtung zur Drallerzeugung zwischen einem Oxidationskatalysator und einem SCR-Katalysator angeordnet und umfasst eine Grundplatte, aus der mehrere Leitbleche ausgestellt sind. Die Grundplatte ist quer zur Abgasströmung im Abgasstrang montiert, wozu sie als Flansch ausgestaltet ist, der in eine Flanschverbindung eingebunden werden kann.

Aus der WO 00/12202 A1 ist eine Strömungsleiteinrichtung bekannt, mit deren Hilfe die Durchmischung von zwei Strömungen im Bereich einer Einleitstelle, über welche eine Nebenströmung in eine Hauptströmung eingeleitet wird, verbessert werden kann. Die bekannte Strömungsleiteinrichtung besitzt hierzu parallel zur Strömungsrichtung der Hauptströmung einen C-förmigen oder V-förmigen Querschnitt. Der zugehörige Profilkörper ist dabei an seinem Längsende mit dem die Hauptströmung führenden Rohrkörper verbunden, so dass sich die Schenkel des Profilkörpers in der Strömungsrichtung der Hautströmung erstrecken.

Bei Abgasanlagen von Brennkraftmaschinen kann es aus unterschiedlichen Gründen erforderlich sein, eine Abgasströmung innerhalb eines Abgaspfads gezielt zu führen oder zu leiten. Beispielsweise kann so ein Totwasserbereich im Bereich einer Kurve oder Krümmung des Abgaspfads reduziert werden. Ferner kann durch die Erzeugung eines Dralls stromauf einer Querschnittserweiterung eine gleichmäßigere Strömungsverteilung im erweiterten Querschnitt erzielt werden. Des weiteren kann es aus unterschiedlichen Gründen erforderlich sein, ein flüssiges Edukt in den Abgasstrom einzudüsen. Beispielsweise kann Kraftstoff stromauf eines Oxidationskatalysators in den Abgasstrom eingespritzt werden, um an einem stromab nachfolgenden Oxidationskatalysator eine exotherme Verbrennungsreaktion auszulösen. Ebenso kann beispielsweise ein Reduktionsmittel, wie zum Beispiel Ammoniak, in den Abgasstrom eingespritzt werden, um in einem nachfolgend angeordneten SCR-Katalysator im Abgas mitgeführte Stickoxide zu reduzieren. Anstelle von Ammoniak kann auch Harnstoff beziehungsweise eine wässrige Harnstofflösung in den Abgasstrom eingespritzt werden. Durch eine Hydrolysereaktion entstehen aus der Harnstoff-Wasser-Lösung dann Ammoniak und Wasser. Ferner kann ein Kraftstoff oder ein anderes geeignetes Reduktionsmittel stromauf eines NOX-Speicherkatalysators in die Abgasströmung eingespritzt werden, um den NOX-Speicherkatalysator zu regenerieren.

Um die Wirkungsweise des in flüssiger Form in den Abgasstrang eingespritzten Edukts zu verbessern beziehungsweise zu ermöglichen, ist eine weitgehende Verdampfung ebenso erstrebenswert wie eine intensive Durchmischung mit dem Abgas, um so ein möglichst homogenes Abgas-Edukt-Gemisch zu erhalten. Hierzu kann die Abgasanlage mit einer im Abgasstrang stromab der Einspritzeinrichtung angeordneten Strömungsleiteinrichtung ausgestattet sein, die auf geeignete Weise als Misch- und/oder Verdampfungseinrichtung ausgestaltet ist.

Die vorliegende Erfindung beschäftigt sich mit dem Problem, für eine Abgasanlage mit einer Strömungsleiteinrichtung eine verbesserte Ausführungsform anzugeben, die sich insbesondere durch eine preiswerte Herstellbarkeit auszeichnet. Außerdem soll vorzugsweise eine vereinfachte Adaption an unterschiedliche Einbausituationen ermöglicht werden.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Strömungsleiteinrichtung mit zumindest einem U-förmigen Leitblechkörper auszubilden, dessen U-Schenkel in die Abgasströmung hineinragende Strömungsleitbleche bilden und dessen U-Basis zur Montage des Leitblechkörpers in der Abgasanlage dient. Der jeweilige Leitblechkörper besitzt somit einen sehr einfachen und somit preiswerten Aufbau. Mit der U-Basis lässt sich der jeweilige Leitblechkörper an unterschiedlich konturierten Abschnitten der Abgasanlage vergleichsweise einfach befestigen.

Bei der erfindungsgemäßen Abgasanlage ist der jeweilige Leitblechkörper mit seiner U-Basis an einem Rohrabschnitt der Abgasanlage montiert, so dass die Strömungsleitbleche quer zu einer im Betrieb der Abgasanlage im Rohrabschnitt geführten Abgasströmung von der U-Basis abstehen und mit der Abgasströmung zusammenwirken.

Bevorzugt ist eine Ausführungsform, bei welcher der jeweilige Leitblechkörper aus einem einzigen Stück, insbesondere aus einem einzigen Blechstück, hergestellt ist. Somit handelt es sich beim Leitblechkörper um ein Blechformteil, das besonders preiswert herstellbar ist.

Der jeweilige Leitblechkörper kann mit seiner U-Basis entweder direkt an einem Rohrabschnitt der Abgasanlage befestigt werden oder indirekt über einen Rohrkörper, der bezüglich des Rohrabschnitts der Abgasanlage ein separat hergestelltes Bauteil bildet. In diesen Rohrkörper ist der jeweilige Leitblechkörper eingebaut und fest damit verbunden. Die Strömungsleiteinrichtung bildet in Verbindung mit diesem Rohrkörper eine komplett vormontierbare Einheit, die im vormontierten Zustand in den jeweiligen Rohrabschnitt der Abgasanlage eingebaut werden kann.

Mit Hilfe des Leitblechkörpers lassen sich bei der Abgasanlage parallele Umlenkschaufeln ausbilden, welche eine Strömungsumlenkung im Bereich einer Rohrbiegung oder dergleichen unterstützen. Des weiteren lassen sich mit mehreren Leitblechkörpern in der Abgasanlage ein Drallerzeuger oder ein Mischer oder ein Verdampfer oder eine beliebige Kombination aus Drallerzeuger, Mischer und Verdampfer realisieren. Die einzelnen Leitblechkörper können dabei in einem gemeinsamen Axialabschnitt in Umfangsrichtung verteilt angeordnet sein. Ebenso ist es möglich, die einzelnen Leitblechkörper axial hintereinander und in Umfangsrichtung versetzt zueinander anzuordnen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzip- darstellung einer Abgasanlage,
- Fig. 2: einen Querschnitt der Abgasanlage im Bereich einer Strömungsleiteinrichtung entsprechend Schnittli- nien II in Fig. 1,
- Fig. 3: einen Längsschnitt der Abgasanlage im Bereich der Strömungsleiteinrichtung entsprechend Schnittli- nien III in Fig. 2,
- Fig. 4: einen Querschnitt der Abgasanlage im Bereich einer anderen Strömungsleiteinrichtung entsprechend Schnittlinien IV in Fig. 1,
- Fig. 5: eine Draufsicht auf einen Blechstreifen zur Her- stellung eines Leitblechkörpers,
- Fig. 6: eine Ansicht wie in Fig. 5, jedoch bei einer ande- ren Ausführungsform.

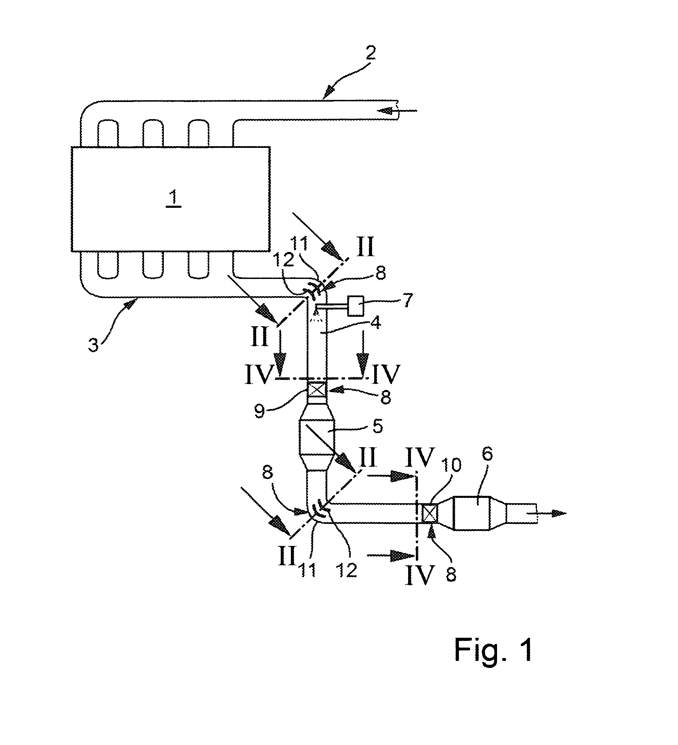

Entsprechend Fig. 1 kann eine Brennkraftmaschine 1 in üblicher Weise mit einer Frischgasanlage 2 zur Versorgung mit Frischgas, z.B. Luft, sowie mit einer Abgasanlage 3 zum Abführen von Abgas ausgestattet sein. Die Brennkraftmaschine 1 ist dabei zusammen mit der Frischgasanlage 2 und der Abgasanlage 3 bevorzugt in einem Kraftfahrzeug angeordnet. Die Abgasanlage 3 umfasst ein Abgasrohr 4, in das mehrere Abgasbehandlungseinrichtungen eingebunden sein können. Im gezeigten Beispiel enthält die Abgasanlage 3 beispielsweise einen SCR-Katalysator 5 und stromab davon ein Partikelfilter 6. Stromauf des SCR-Katalysators 5 ist hier eine Einspritzeinrichtung 7 angeordnet, mit deren Hilfe ein geeignetes Reduktionsmittel stromauf des SCR-Katalysators 5 in den Abgasstrom eingebracht werden kann. Beispielsweise kann mit Hilfe der Einspritzeinrichtung 7 Ammoniak oder Harnstoff oder eine wässrige Harnstofflösung in das Abgas eingespritzt werden. Die Einspritzung erfolgt in flüssiger Form, so dass im Abgas zunächst eine Verdampfung des flüssigen Edukts erfolgt. Des weiteren ist eine Homogenisierung des Edukt-Abgas-Gemischs erforderlich. Um die Verdampfung des flüssigen Edukts sowie um die Durchmischung zwischen Edukt und Abgas zu verbessern, weist die Abgasanlage 3 stromab der Einspritzeinrichtung 7 und stromauf des SCR-Katalysators 5 eine Strömungsleiteinrichtung 8 auf, die als Misch- und/oder Verdampfungseinrichtung 9 ausgestaltet ist.

Unmittelbar stromauf des Partikelfilters 6 ist im gezeigten Beispiel eine weitere Strömungsleiteinrichtung 8 angeordnet, die exemplarisch als Drallerzeuger 10 ausgestaltet sein kann. Der Drallerzeuger 10 generiert in der Strömung einen Drall, der am Einlass des Partikelfilters 6 eine Aufweitung der Strömung entsprechend dem sich erweiternden Strömungsquerschnitt im Partikelfilter 6 bewirkt. Grundsätzlich kann auch die Misch- und/oder Verdampfungseinrichtung 9 eine derartige Drallerzeugerfunktion beinhalten.

Ferner weist die hier gezeigte Abgasanlage 3 zwei 90°-Kurven oder 90°-Bögen 11 auf. Zur Reduzierung stromab liegender Totwassergebiete im Bereich dieser Bögen 11 kann die Abgasanlage 3 in diesen Bögen 11 ebenfalls jeweils eine weitere Strömungsleiteinrichtung 8 enthalten, die jeweils als Umlenkeinrichtung 12 ausgestaltet sind.

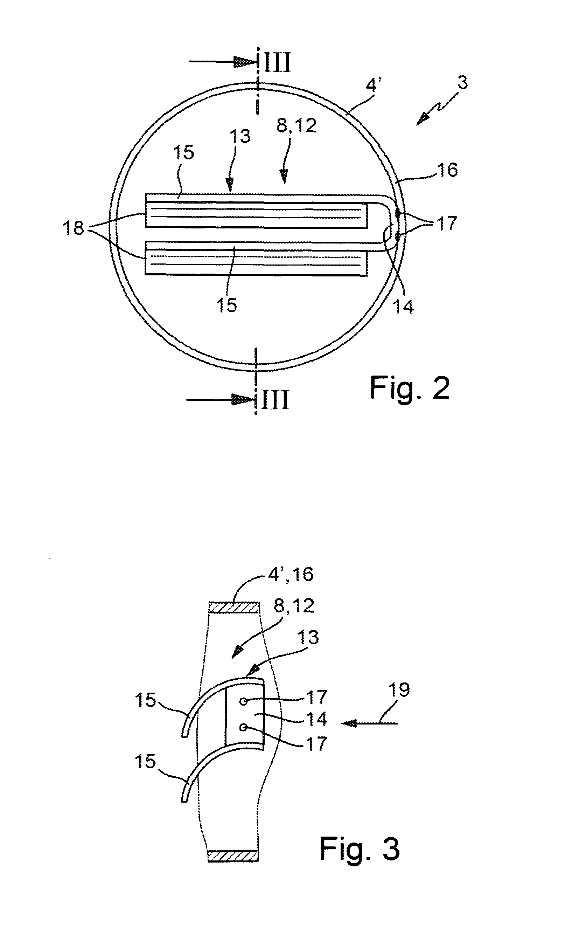

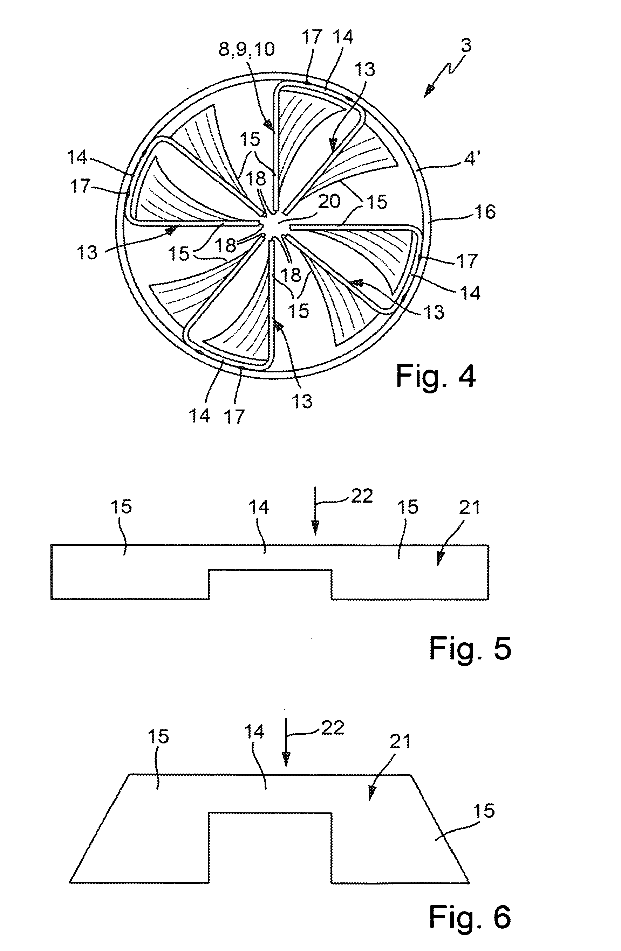

Entsprechend den Fig. 2 bis 4 umfasst eine derartige Strömungsleiteinrichtung 8 jeweils wenigstens einen U-förmigen Leitblechkörper 13. Die in den Fig. 2 und 3 gezeigte Ausführungsform der Strömungsleiteinrichtung 8 weist exemplarisch nur einen einzigen solchen Leitblechkörper 13 auf. Bei dieser Ausführungsform kann es sich beispielsweise um die Umlenkeinrichtung 12 handeln. Im Unterschied dazu zeigt die in Fig. 4 gezeigte Ausführungsform vier derartige Leitblechkörper 13. Es ist klar, dass die Strömungsleiteinrichtung 8 auch mehr oder weniger als vier derartige Leitblechkörper 13 aufweisen kann. Die in Fig. 4 gezeigte Ausführungsform kann als Mischer und als Verdampfer beziehungsweise als Misch-und/oder Verdampfungseinrichtung 9 sowie als Drallerzeuger 10 verwendet werden.

Entsprechend den Fig. 2 bis 6 weist der jeweilige Leitblechkörper 13 eine U-Basis 14 und zwei U-Schenkel 15 auf. Die Schenkel 15 sind über ihre Basis 14 miteinander verbunden. Die Basis 14 dient dabei zur Montage des Leitblechkörpers 13 an einem Rohrabschnitt 4' des Abgasrohrs 4 der Abgasanlage 3. Dabei kann der jeweilige Leitblechkörper 13 mit seiner Basis 14 unmittelbar an besagtem Rohrabschnitt 4' befestigt sein. Ebenso ist es möglich, dass die Strömungsleiteinrichtung 8 einen separat von der übrigen Abgasanlage 3 herstellbaren Rohrkörper 16 aufweist, an dem der jeweilige Leitblechkörper 13 mit Hilfe seiner Basis 14 unmittelbar befestigt ist und der in die Abgasanlage 3 auf geeignete Weise einsetzbar ist. Beispielsweise wird hierzu mit Hilfe des Rohrkörpers 16 durch den Einbau des wenigstens einen Leitblechkörpers 13 eine komplett vormontierbare Einheit geschaffen, die in den entsprechenden Rohrabschnitt 4' der Abgasanlage 3 eingebaut werden kann.

Die Schenkel 15 bilden jeweils ein Strömungsleitblech, das im Folgenden ebenfalls mit 15 bezeichnet wird. Das jeweilige Strömungsleitblech 15 wirkt im Betrieb der Abgasanlage 3, also im Betrieb der Brennkraftmaschine 1 mit einer Abgasströmung zusammen, die im jeweiligen Rohrabschnitt 4' beziehungsweise im Rohrkörper 16 geführt ist.

Der jeweilige Leitblechkörper 13 ist vorzugsweise aus einem einzigen Stück hergestellt. Ferner handelt es sich beim jeweiligen Leitblechkörper 13 um ein Blechformteil. Demnach ist der jeweilige Leitblechkörper 13 insbesondere aus einem einzigen Blechstück hergestellt.

Eine sichere Befestigung des jeweiligen Leitblechkörpers 13 am Rohrabschnitt 4' beziehungsweise am Rohrkörper 16 erfolgt beispielsweise durch wenigstens eine Schweißverbindung 17. Die jeweilige Schweißverbindung 17 kann beispielsweise durch Widerstandsschweißen realisiert werden. Entsprechende Schweißwarzen zur Stromkonzentration können an der Basis 14 integral ausgeformt sein, beispielsweise mittels eines Prägevorgangs. Ebenso kann es sich bei der jeweiligen Schweißverbindung 17 um Heftschweißnähte oder um Schweißpunkte handeln. Des weiteren kann auch ein Lochschweißen realisiert werden, bei dem der jeweilige Rohrabschnitt 4' beziehungsweise Rohrkörper 16 im Bereich der Basis 14 eine durch die Basis 14 vollständig verschließbare Öffnung enthält, entlang deren Öffnungsrand eine Schweißnaht zum Verbinden der Basis 14 mit dem Rohrabschnitt 4' beziehungsweise mit dem Rohrkörper 16 erzeugt werden kann. Alternativ ist es grundsätzlich auch möglich, die Basis 14 mit dem Rohrabschnitt 4' beziehungsweise mit dem Rohrkörper 16 zu vercrimpen, zu verschrauben, zu verlöten oder zu vernieten.

Bevorzugt ist der jeweilige Leitblechkörper 13 im Hinblick auf den Rohrkörper 16 beziehungsweise im Hinblick auf den Rohrabschnitt 4' so dimensioniert beziehungsweise angeordnet, dass die Strömungsleitbleche 15 im Rohrabschnitt 4' beziehungsweise im Rohrkörper 16 freistehend enden. Die freistehenden Enden sind in den Fig. 2 und 4 mit 18 bezeichnet. Bei der in den Fig. 2 und 3 gezeigten Ausführungsform bilden die Strömungsleitbleche 15 im Rohrkörper 16 beziehungsweise im Rohrabschnitt 4' ein in sich paralleles Umlenkschaufelpaar, um so die gewünschte Umlenkeinrichtung 12 zu realisieren. Hierzu wird im Beispiel nur ein einziger Leitblechkörper 13 verwendet. Grundsätzlich ist auch eine Ausführungsform denkbar, bei der zwei oder mehr derartige Leitblechkörper 13 zur Ausbildung von mehr als zwei zueinander parallelen Umlenkschaufeln zu verwenden. Die einzelnen Leitblechkörper 13 können dabei innerhalb desselben Axialabschnitts des Rohrkörpers 4 beziehungsweise des Rohrstücks 16 angeordnet sein. Ebenso ist es möglich, die einzelnen Leitblechkörper 13 in der Strömungsrichtung hintereinander im Rohrabschnitt 4' beziehungsweise im Rohrkörper 16 anzuordnen.

Bei der in Fig. 4 gezeigten Ausführungsform sind mehrere Leitblechkörper 13 vorgesehen, nämlich rein exemplarisch vier. Diese sind im Rohrkörper 16 beziehungsweise im Rohrabschnitt 4' so angeordnet, dass die einzelnen Strömungsleitbleche 15 zueinander sternförmig angeordnet sind. Im Beispiel sind die einzelnen Leitblechkörper 13 dabei im gleichen Axialbereich des Rohrabschnitts 4' beziehungsweise Rohrkörpers 16 angeordnet, und zwar in Umfangsrichtung zueinander versetzt. Ebenso ist es grundsätzlich möglich, einzelne oder mehrere derartige Leitblechkörper 13 in axialer Richtung hintereinander und vorzugsweise in Umfangsrichtung zueinander versetzt anzuordnen.

Entsprechend den Fig. 2 bis 4 besitzen die Strömungsleitbleche 15 in ihrem jeweiligen Querschnitt ein Leitprofil. Dieses kann anströmseitig parallel zur Abgasströmung ausgerichtet sein, die in Fig. 3 durch einen Pfeil 19 angedeutet ist. Hierdurch weisen die Strömungsleitbleche 15 einen besonders niedrigen Strömungswiderstand auf. Abströmseitig sind die Strömungsleitbleche 15 gegenüber der Abgasströmung 19 angestellt, wodurch die gewünschte strömungsleitende Wirkung erzielt wird. Bei der in den Fig. 2 und 3 gezeigten Ausführungsform besitzen die Strömungsleitbleche 15 entlang ihrer quer zur Abgasströmung 19 verlaufenden Längsrichtung jeweils ein konstantes Profil. Hierdurch sind die Strömungsleitbleche 15 gleichwirkend und bilden das gewünschte Umlenkschaufelpaar. Im Unterschied dazu können die Strömungsleitbleche 15 bei der in Fig. 4 gezeigten Ausführungsform eine variierende Anstellung aufweisen. Grundsätzlich sind sie auch hier anströmseitig parallel zur Abgasströmung ausgerichtet. Die abströmseitige Anstellung nimmt hier mit zunehmendem Abstand von der zugehörigen Basis 14 ab. Das bedeutet, dass das jeweilige Strömungsleitblech 15 radial außen eine stärkere Umlenkung der Abgasströmung in Umfangsrichtung generiert als radial innen.

Zumindest bei dem in Fig. 3 gezeigten Beispiel erfolgt der Übergang von der nicht angestellten Anströmkante zur maximal angestellten Abströmkante kontinuierlich beziehungsweise stetig. Ebenso ist grundsätzlich eine gestufte Änderung der Anstellung denkbar.

Bei der in Fig. 4 gezeigten Ausführungsform ist ein Kernbereich 20 des durchströmbaren Querschnitts des Rohrkörpers 16 beziehungsweise des Rohrabschnitts 4 offen. Das bedeutet, dass die Strömungsleitbleche 15 in radialer Richtung jeweils kleiner sind als der Radius des durchströmbaren Querschnitts, der hier exemplarisch kreisförmig ausgebildet ist. Bei einer alternativen Ausführungsform können die Leitblechkörper 13 im Rohrabschnitt 4' beziehungsweise im Rohrkörper 16 so angeordnet sein, dass besagter Kernbereich 20 in der Strömungsrichtung blickdicht ist. Hierzu können die Strömungsleitbleche 15 in radialer Richtung größer dimensioniert werden. Um eine gegenseitige Berührung der Strömungsleitbleche 15 im Bereich ihrer freien Enden 18 zu vermeiden, kann beispielsweise vorgesehen sein, die Leitblechkörper 13 axial hintereinander im Rohrkörper 16 beziehungsweise im Rohrabschnitt 4 anzuordnen.

Entsprechend den Fig. 5 und 6 lassen sich die Leitblechkörper 13 aus Blechstücken 21 herstellen. Die Fig. 5 und 6 zeigen dabei für zwei verschiedene Ausführungsformen der Leitblechkörper 13 den zugehörigen Blechkörper 21 in einem ausgeschnittenen, jedoch noch nicht umgeformten Zustand. Erkennbar sind die Basis 14 und die beiden Schenkel 15. Exemplarisch können dabei die Schenkel 15 in der durch einen Pfeil 22 angedeuteten Strömungsrichtung eine größere Tiefe aufweisen als die zugehörige Basis 14, welche die beiden Schenkel 15 miteinander verbindet. Fig. 5 zeigt einen Blechkörper 21, der sich beispielsweise für die Herstellung des in Fig. 2 gezeigten Leitblechkörpers 13 verwenden lässt. Im Unterschied dazu zeigt Fig. 6 eine andere Ausführungsform für einen solchen Blechstreifen 21, der sich beispielsweise zur Herstellung eines in Fig. 4 verwendeten Leitblechkörpers 13 verwenden lässt.

## Patentansprüche

1. Abgasanlage für eine Brennkraftmaschine (1), insbesondere in einem Kraftfahrzeug, mit wenigstens einer Strömungsleiteinrichtung (8),
**dadurch gekennzeichnet,**
**dass** die jeweilige Strömungsleiteinrichtung (8) wenigstens einen U-förmigen Leitblechkörper (13) aufweist, der mit seiner U-Basis (14) an einem Rohrabschnitt (4') der Abgasanlage (3) montiert ist und dessen U-Schenkel (15) jeweils ein Strömungsleitblech (15) bilden, das quer zu einer im Betrieb der Abgasanlage (3) im Rohrabschnitt (4') geführten Abgasströmung (19) von der U-Basis (14) absteht und mit der Abgasströmung (19) zusammenwirkt.

2. Abgasanlage nach Anspruch 1,
**dadurch gekennzeichnet,**
**dass** der jeweilige Leitblechkörper (13) aus einem einzigen Stück, insbesondere aus einem einzigen Blechstück, hergestellt ist.

3. Abgasanlage nach Anspruch 1 oder 2,
**dadurch gekennzeichnet,**
**dass** das jeweilige Strömungsleitblech (15) ein Leitprofil aufweist, das anströmseitig parallel zur Abgasströmung (19) ausgerichtet ist und das abströmseitig gegenüber der Abgasströmung (19) angestellt ist.

4. Abgasanlage nach einem der Ansprüche 1 bis 3,
**dadurch gekennzeichnet,**
- **dass** das jeweilige Strömungsleitblech (15) entlang seiner quer zur Abgasströmung (19) verlaufenden Längsrichtung ein konstantes Profil aufweist, oder
- **dass** das jeweilige Strömungsleitblech (15) entlang seiner quer zur Abgasströmung (19) verlaufenden Längsrichtung ein Profil mit variierender Anstellung aufweist, wobei insbesondere die Anstellung mit zunehmendem Abstand von der U-Basis (14) abnehmen kann.

5. Abgasanlage nach einem der Ansprüche 1 bis 4,
**dadurch gekennzeichnet,**
**dass** die Strömungsleitbleche (15) in der Strömungsrichtung (22) eine größere Tiefe aufweisen als die U-Basis (14).

6. Abgasanlage nach einem der Ansprüche 1 bis 5,
**dadurch gekennzeichnet,**
**dass** ein Rohrkörper (16) vorgesehen ist, an dem der wenigstens eine Leitblechkörper (13) befestigt ist und der mit dem daran befestigten wenigstens einen Leitblechkörper (13) in den Rohrabschnitt (4') der Abgasanlage (3) einsetzbar ist.

7. Abgasanlage nach Anspruch 6,
**dadurch gekennzeichnet,**
- **dass** der jeweilige Leitblechkörper (13) im Rohrkörper (16) so angeordnet ist, dass die Strömungsleitbleche (15) freistehend enden.

8. Abgasanlage nach Anspruch 6 oder 7,
**dadurch gekennzeichnet,**
**dass** die Strömungsleitbleche (15) im Rohrkörper (16) ein in sich paralleles Umlenkschaufelpaar bilden.

9. Abgasanlage nach einem der Ansprüche 6 bis 8,
**dadurch gekennzeichnet,**
**dass** mehrere Leitblechkörper (13) im Rohrkörper (16) so angeordnet sind, dass die Strömungsleitbleche (15) zueinander sternförmig angeordnet sind.

10. Abgasanlage nach einem der Ansprüche 6 bis 9,
**dadurch gekennzeichnet,**
**dass** mehrere Leitblechkörper (13) im Rohrkörper (16) zur Ausbildung eines Drallerzeugers und/oder Mischers und/oder Verdampfers angeordnet sind.

11. Abgasanlage nach einem der Ansprüche 6 bis 10,
**dadurch gekennzeichnet,**
**dass** mehrere Leitblechkörper (13) im Rohrkörper (16) so an geordnet und deren Strömungsleitbleche (15) so ausgestaltet sind, dass die Strömungsleitbleche (15) einen in der Strömungsrichtung (22) blickdichten Kernbereich (20) im Querschnitt des Rohrkörpers (16) ausbilden.

12. Abgasanlage nach einem der Ansprüche 6 bis 11,
**dadurch gekennzeichnet,**
**dass** der jeweilige Leitblechkörper (13) mit seiner Basis (14) durch Widerstandsschweißen, Heftschweißnähte, Punktschweißen, Lochweißen, Verlöten oder Vercrimpen am Rohrkörper (16) befestigt ist.

13. Abgasanlage nach einem der Ansprüche 1 bis 5,
**dadurch gekennzeichnet,**
**dass** der jeweilige Leitblechkörper (13) im Rohrabschnitt (4') so angeordnet ist, dass die Strömungsleitbleche (15) freistehend enden.

14. Abgasanlage nach einem der Ansprüche 1 bis 5 oder 13,
**dadurch gekennzeichnet,**
**dass** die Strömungsleitbleche (15) im Rohrabschnitt (4') ein in sich paralleles Umlenkschaufelpaar bilden.

15. Abgasanlage nach einem der Ansprüche 1 bis 5 oder 13 oder 14,
**dadurch gekennzeichnet,**
**dass** mehrere Leitblechkörper (13) im Rohrabschnitt (4') so angeordnet sind, dass die Strömungsleitbleche (15) zueinander sternförmig angeordnet sind.

16. Abgasanlage nach einem der Ansprüche 1 bis 5 oder 13 bis 15,
**dadurch gekennzeichnet,**
**dass** mehrere Leitblechkörper (13) im Rohrabschnitt (4') zur Ausbildung eines Drallerzeugers und/oder Mischers und/oder Verdampfers angeordnet sind.

17. Abgasanlage nach einem der Ansprüche 1 bis 5 oder 13 bis 16,
**dadurch gekennzeichnet,**
**dass** mehrere Leitblechkörper (13) im Rohrabschnitt (4') so angeordnet und deren Strömungsleitbleche (15) so ausgestaltet sind, dass die Strömungsleitbleche (15) einen in der Strömungsrichtung (22) blickdichten Kernbereich (20) im Querschnitt des Rohrabschnitt (4') ausbilden.

18. Abgasanlage nach einem der Ansprüche 1 bis 5 oder 13 bis 17,
**dadurch gekennzeichnet,**
**dass** der jeweilige Leitblechkörper (13) mit seiner Basis (14) durch Widerstandsschweißen, Heftschweißnähte, Punktschweißen, Lochweißen, Verlöten oder Vercrimpen am Rohrabschnitt (4') befestigt ist.

## Claims

1. An exhaust system for a combustion engine (1), in particular in a motor vehicle, having at least one flow guiding device (8), **characterized in that** the respective flow guiding device (8) comprises at least one U-shaped guiding plate body (13), which with its U-base (14) is mounted to a pipe section (4') of the exhaust system (3) and whose U-legs (15) each form a flow guiding plate (15), which stands away from the U-base (14) and interacts with the exhaust gas flow (19) transversely to an exhaust gas flow (19) conducted in the pipe section (4') during the operation of the exhaust system (3).

2. The exhaust system according to Claim 1, **characterized in that** the respective guiding plate body (13) is produced from a single piece, in particular from a single sheet metal piece.

3. The exhaust system according to Claim 1 or 2, **characterized in that** the respective flow guiding plate (15) comprises a guiding profile which on the onflow side is orientated parallel to the exhaust gas flow (19) and which on the outflow side is angled relative to the exhaust gas flow (19).

4. The exhaust system according to any one of the Claims 1 to 3, **characterized**
- **in that** the respective flow guide plate (15) has a constant profile along its longitudinal direction running transversely to the exhaust gas flow (19), or
- **in that** the respective flow guide plate (15) has a profile with varying angulation along its longitudinal direction running transversely to the exhaust gas flow (19), wherein in particular the angulation can decrease with increasing distance from the U-base (14).

5. The exhaust system according to any one of the Claims 1 to 4, **characterized in that** the flow guide plates (15) have a greater depth in the flow direction (22) than the U-base (14).

6. The exhaust system according to any one of the Claims 1 to 5, **characterized in that** a pipe body (16) is provided, on which the at least one guide plate body (13) is fastened and which with the at least one guide plate body (13) fastened thereto can be inserted in the pipe section (4') of the exhaust system (3).

7. The exhaust system according to Claim 6, **characterized**
- **in that** the respective guide plate body (13) is arranged in the pipe body (16) so that the flow guide plates (15) end in a free standing manner.

8. The exhaust system according to Claim 6 or 7, **characterized in that** the flow guide plates (15) in the pipe body (16) form a deflection blade pair parallel within itself.

9. The exhaust system according to any one of the Claims 6 to 8, **characterized in that** a plurality of guide plate bodies (13) are arranged in the pipe body (16) so that the flow guide plates (15) are arranged star-shaped relative to one another.

10. The exhaust system according to any one of the Claims 6 to 9, **characterized in that** a plurality of guide plate bodies (13) are arranged in the pipe body (16) for forming a swirl generator and/or mixer and/or evaporator.

11. The exhaust system according to any one of the Claims 6 to 10, **characterized in that** a plurality of guide plate bodies (13) are arranged in the pipe body (16) so that their flow guide plates (15) are embodied such that the flow guide plates (15) form a core region (20) in the cross section of the pipe body (16) that is opaque in the flow direction (22).

12. The exhaust system according to any one of the Claims 6 to 11, **characterized in that** the respective guide plate body (13) with its base (14) is fastened to the pipe body (16) through resistance welding, tack weld seams, spot welding, hole welding, soldering or crimping.

13. The exhaust system according to any one of the Claims 1 to 5, **characterized in that** the respective guide plate body (13) is arranged in the pipe section (4') so that the flow guide plates (15) end in a free standing manner.

14. The exhaust system according to any one of the Claims 1 to 5 or 13, **characterized in that** the flow guide plates (15) form a deflection blade pair in the pipe section (4') that is parallel within itself.

15. The exhaust system according to any one of the Claims 1 to 5 or 13 or 14, **characterized in that** a plurality of guide plate bodies (13) is arranged in the pipe section (4') so that the flow guide plates (15) are arranged star-shaped relative to one another.

16. The exhaust system according to any one of the Claims 1 to 5 or 13 to 15, **characterized in that** a plurality of guide plate bodies (13) is arranged in the pipe section (4') for forming a swirl generator and/or mixer and/or evaporator.

17. The exhaust system according to any one of the Claims 1 to 5 or 13 to 16, **characterized in that** a plurality of guide plate bodies (13) is arranged in the pipe section (4') so that their flow guide plates (15) are embodied so that the flow guide plates (15) form a core region (20) in the cross section of the pipe section (4') that is opaque in the flow direction (22).

18. The exhaust system according to any one of the Claims 1 to 5 or 13 to 17, **characterized in that** the respective guide plate body (13) with its base (14) is fastened to the pipe section (4') through resistance welding, tack weld seams, spot welding, hole welding, soldering or crimping.

## Revendications

1. Installation d'échappement pour un moteur à combustion interne (1), en particulier sur un véhicule automobile, comprenant au moins un dispositif de guidage d'écoulement (8),
**caractérisée**
**en ce que** le dispositif de guidage d'écoulement (8) respectif présente au moins un corps de tôle chicane (13) en U, qui est monté avec sa base du U (14) sur une partie de tuyau (4') de l'installation d'échappement (3) et dont les branches en U (15) forment respectivement une chicane d'écoulement (15), laquelle s'écarte de la base du U (14) transversalement à un écoulement de gaz brûlés (19) guidé pendant le fonctionnement de l'installation d'échappement (3) dans la partie de tuyau (4') et coopère avec l'écoulement de gaz brûlés (19).

2. Installation d'échappement selon la revendication 1,
**caractérisée**
**en ce que** le corps de chicane (13) concerné est fabriqué d'un seul tenant, en particulier à partir d'une unique pièce en tôle.

3. Installation d'échappement selon la revendication 1 ou 2,
**caractérisée**
**en ce que** la chicane d'écoulement (15) respective présente un profilé de guidage, qui est orienté côté arrivée de flux parallèlement à l'écoulement de gaz brûlés (19) et qui est placé côté évacuation en face de l'écoulement de gaz brûlés (19).

4. Installation d'échappement selon l'une des revendications 1 à 3,
**caractérisée**
- **en ce que** la chicane d'écoulement (15) respective présente un profil constant le long de sa direction longitudinale agencée transversalement à l'écoulement de gaz brûlés (19), ou
- **en ce que** la chicane d'écoulement (15) respective présente le long de sa direction longitudinale, agencée transversalement à l'écoulement de gaz brûlés (19), un profil avec un placement variable, en particulier le placement pouvant diminuer au fur et à mesure que la distance à la base du U (14) augmente.

5. Installation d'échappement selon l'une des revendications 1 à 4,
**caractérisée**
**en ce que** les chicanes d'écoulement (15) présentent dans le sens d'écoulement (22) une profondeur plus grande que la base du U (14).

6. Installation d'échappement selon l'une des revendications 1 à 5,
**caractérisée**
**en ce qu'**un corps de tuyau (16) est prévu, sur lequel le au moins un corps de tôle chicane (13) est fixé et qui peut être inséré avec le au moins un corps de tôle chicane (13) fixé dessus dans la partie de tuyau (4') de l'installation d'échappement (3).

7. Installation d'échappement selon la revendication 6,
**caractérisée**
- **en ce que** le corps de tôle chicane (13) respectif est disposé dans le corps de tuyau (16), de telle sorte que les tôles chicanes d'écoulement (15) se terminent de façon libre.

8. Installation d'échappement selon la revendication 6 ou 7,
**caractérisée**
**en ce que** les tôles chicane d'écoulement (15) forment dans le corps de tuyau (16) une paire de pelles de renvoi parallèles en soi.

9. Installation d'échappement selon l'une des revendications 6 à 8,
**caractérisée**
**en ce que** plusieurs corps de tôle chicane (13) sont disposés dans le corps de tuyau (16), de telle sorte que les tôles chicane d'écoulement (15) sont disposées les unes par rapport aux autres en forme d'étoile.

10. Installation d'échappement selon l'une des revendications 6 à 9,
**caractérisée**
**en ce que** plusieurs corps de tôle chicane (13) sont disposés dans le corps de tuyau (16) pour former un générateur de turbulence et/ou un mélangeur et/ou un évaporateur.

11. Installation d'échappement selon l'une des revendications 6 à 10,
**caractérisée**
**en ce que** plusieurs corps de tôle chicane (13) sont disposés dans le corps de tuyau (16) et dont les tôles chicanes d'écoulement (15) sont conçues de telle sorte que les tôles chicanes d'écoulement (15) forment une zone clé (20), étanche à la vue dans le sens d'écoulement (22), dans la section du corps de tuyau (16).

12. Installation d'échappement selon l'une des revendications 6 à 11,
**caractérisée**
**en ce que** le corps de tôle chicane (13) respectif est fixé avec sa base (14) par soudage par résistance, par des soudures de pointage, soudage ponctuel, soudage en trou, brasage ou sertissage sur le corps de tuyau (16).

13. Installation d'échappement selon l'une des revendications 1 à 5,
**caractérisée**
**en ce que** le corps de tôle chicane (13) respectif est disposé dans la partie de tuyau (4'), de telle sorte que les tôles chicanes d'écoulement (15) se terminent de façon libre.

14. Installation d'échappement selon l'une des revendications 1 à 5 ou 13,
**caractérisée**
**en ce que** les tôles chicane d'écoulement (15) forment dans la partie de tuyau (4') une paire de pelles de déviation parallèles en soi.

15. Installation d'échappement selon l'une des revendications 1 à 5 ou 13 ou 14,
**caractérisée**
**en ce que** plusieurs corps de tôle chicane (13) sont disposés dans la partie de tuyau (4') de telle sorte que les tôles chicanes d'écoulement (15) sont disposées en forme d'étoile les unes par rapport aux autres.

16. Installation d'échappement selon l'une des revendications 1 à 5 ou 13 à 15,
**caractérisée**
**en ce que** plusieurs corps de tôle chicane (13) sont disposés dans la partie de tuyau (4') pour former un générateur de turbulence et/ou un mélangeur et/ou un évaporateur.

17. Installation d'échappement selon l'une des revendications 1 à 5 ou 13 à 16,
**caractérisée**
**en ce que** plusieurs corps de tôle chicane (13) sont disposés dans la partie de tuyau (4') et dont les tôles chicane d'écoulement (15) sont conçues, de telle sorte que les tôles chicane d'écoulement forment une zone centrale (20), étanche à la vue dans le sens d'écoulement (22), dans la section de la partie de tuyau (4').

18. Installation d'échappement selon l'une des revendications 1 à 5 ou 13 à 17,
**caractérisée**
**en ce que** le corps de tôle chicane (13) respectif est fixé avec sa base (14) par soudage par résistance, des soudures de pointage, soudage ponctuel, soudage à trou, brasage ou sertissage sur la partie de tuyau (4').
